**Europäisches Patentamt**

**European Patent Office**

**Office européen des brevets**

(19)

(11) Veröffentlichungsnummer: **0 212 471**
**B1**

(12) # EUROPÄISCHE PATENTSCHRIFT

(45) Veröffentlichungstag der Patentschrift:
27.09.89

(21) Anmeldenummer: 86110925.4

(22) Anmeldetag: 07.08.86

(51) Int. Cl.⁴: **F 02 C 7/32**, F 01 D 15/10

(54) **Gasturbinentriebwerk mit einer Generatoreinrichtung.**

(30) Priorität: 08.08.85 DE 3528519

(43) Veröffentlichungstag der Anmeldung:
04.03.87 Patentblatt 87/10

(45) Bekanntmachung des Hinweises auf die Patenterteilung:
27.09.89 Patentblatt 89/39

(84) Benannte Vertragsstaaten:
DE FR GB IT

(56) Entgegenhaltungen:
CH-A- 215 803
DE-C- 806 403
FR-A- 2 527 266
GB-A- 1 141 001
US-A- 3 187 188

(73) Patentinhaber: Klöckner-Humboldt-Deutz
Aktiengesellschaft,
Deutz-Mülheimer-Strasse 111 Postfach 80 05 09,
D-5000 Köln 80 (DE)

(72) Erfinder: Haselbauer, Franz, Bahnhofstrasse 13,
D-6309 Münzenberg 1 (DE)
Erfinder: Weber, Thomas, Am Urseler Weg 6,
D-6370 Oberursel 4 (DE)

## Beschreibung

Die Erfindung bezieht sich auf ein Gasturbinentriebwerk nach dem Oberbegriff des Anspruchs 1.

Üblicherweise bestehen Gasturbinentriebwerke zum Antrieb von Flugzeugen oder Flugkörpern zumindest aus einem Verdichter, einer Brennkammer und einer Turbine. Die zum Betrieb des Gasturbinentriebwerks und des Flugzeugs notwendigen Hilfseinrichtungen werden zumeist mechanisch von dem Rotor des Gasturbinentriebwerks mit Energie versorgt. Hier ist insbesondere die Kraftstoffpumpe, die Hydraulikpumpe, die Schmierölpumpe und die Generatoreinrichtung zur Stromversorgung zu nennen. Um die Hilfseinrichtungen mit der jeweils richtigen Drehzahl anzutreiben und um die Energie geeignet zu verteilen, ist es üblich, daß der Rotor zunächst ein Getriebe antreibt, das dann wiederum mit den einzelnen Hilfseinrichtungen verbunden ist. Insgesamt werden eine Vielzahl von Bauteilen und Aggregaten benötigt, wodurch das Systemgewicht der gesamten Einheit, bestehend aus Gasturbinentriebwerk und notwendige Hilfseinrichtungen, in nachteiliger Weise hoch wird. Ein hohes Systemgewicht ist bei dem Anwendungsgebiet des Gasturbinentriebwerks im Flugzeug deshalb besonders nachteilig, weil während des Fluges für jedes zusätzliche Gewicht zur Beförderung extra Antriebsleistung bereitgestellt werden muß. Der Kraftstoffverbrauch nimmt somit in nachteiliger Weise zu oder die Reichweite des Flugzeuges ab. Ferner beeinflußt ein hohes Systemgewicht die Flugeigenschaften durch hohe Trägheitskräfte negativ.

Die FR-A-2 527 266 beschreibt ein Gasturbinentriebwerk für einen Flugkörper, bei dem ein die Energieversorgung von Hilfsgeräten übernehmender Generator räumlich zwischen einem Verdichter und einer Turbine angeordnet ist. Die Kraftstoffpumpe ist jedoch mechanisch über ein Getriebe angetrieben. Aus diesem Grunde weist dieses Gasturbinentriebwerk einen mechanischen Abtrieb auf, der das Gewicht des Triebwerks merklich erhöht.

Der Erfindung liegt die Aufgabe zugrunde, ein Gasturbinentriebwerk mit insgesamt niedrigem Systemgewicht zu schaffen.

Diese Aufgabe wird durch die kennzeichnenden Merkmale des Anspruchs 1 gelöst.

Erfindungsgemäß ist die Kraftstoffpumpe mit einem elektrischen Motor zum Antrieb versehen. Für die Kraftstoffpumpe wird daher ein relativ schweres mechanisches Getriebe nicht benötigt. Insgesamt kann das Gasturbinentriebwerk zum Antrieb der Kraftstoffpumpe somit getriebelos ausgebildet sein, wodurch erhebliche Gewichtseinsparungen zu erzielen sind. Zur notwendigen Energieübertragung an die Kraftstoffpumpe sind erfindungsgemäss lediglich elektrische Leitungen notwendig. Ferner wird eine Vielzahl von Bauteilen des sonst üblichen mechanischen Antriebs der Kraftstoffpumpe eingespart, so daß die Fertigung und Montage des Gasturbinentriebwerks einfacher und kostengünstiger ist. Auch die Materialerhaltung ist durch die geringe Teilezahl besonders preiswert.

Die Generatoreinrichtung ist ferner mit zumindest zwei voneinander vollständig unabhängigen Stromkreisen versehen, wobei einer der Stromkreise speziell für die Lieferung der elektrischen Energie für die Kraftstoffpumpe vorgesehen und ausgelegt ist. Der zweite Stromkreis dient zur vollständig unabhängigen Versorgung eines herkömmlichen Bordnetzes eines Flugzeugs oder ist nur zur Steuerfunktion des Gasturbinentriebwerks vorgesehen. Im Verhältnis zu den anderen Hilfseinrichtungen des Gasturbinentriebwerks bzw. des Flugzeugs benötigt die elektrische Kraftstoffpumpe die größte Leistung. Durch die erfinderischen Merkmale wird sichergestellt, daß nur die direkt für die Energieversorgung der Kraftstoffpumpe notwendigen elektrischen Teile für hohe Stromstärken und somit relativ gewichtsintensiv ausgelegt werden müssen. Insgesamt bleibt daher das Systemgewicht des Gasturbinentriebwerks mit der elektrisch angetriebenen Kraftstoffpumpe und den zwei getrennten Stromkreisen vorteilhaft niedrig.

In einer Ausgestaltung der Erfindung ist es vorgesehen, den Rotor des Gasturbinentriebwerks bzw. das gesamte Gasturbinentriebwerk zur mechanischen Energieabgabe für alle Hilfs- und Steuereinrichtungen nur mit der Generatoreinrichtung zu verbinden. Es werden somit keine zusätzlichen Getriebeeinrichtungen, wie Winkelgetriebe oder Abtriebswellen, in irgendeiner Form benötigt. Der Gesamtaufbau des Gasturbinentriebwerks wird in vorteilhafter Weise einfach, wodurch die Fertigung und die Wartung des Gasturbinentriebwerks außerordentlich preiswert ist. Sämtliche Nebenaggregate sind in diesem Fall ausnahmlos elektrisch angetrieben und können ferner auch besonders einfach, nämlich durch korrekte Auswahl der elektrischen Leistungsgrößen, an die geforderten Leistungsbedingungen der entsprechenden Hilfseinrichtung angepaßt werden. Ein modulartiger Aufbau einer Gasturbinentriebwerksbaureihe mit unterschiedlichen Leistungsangeboten der Gasturbinentriebwerke mit jeweils optimal angepaßten Hilfseinrichtungen wird begünstigt. Es ist auch in vorteilhafter Weise möglich, nachträglich weitere Hilfseinrichtungen, die ebenfalls elektrisch angetrieben sind, an das Gasturbinentriebwerk anzuschließen, ohne dabei in den konstruktiven Aufbau des Gasturbinentriebwerks selbst eingreifen zu müssen. Dieses erfindungsgemäße Gasturbinentriebwerk stellt somit eine vollständig autarke Einheit dar, die gegebenenfalls einfach in alle Einbaufälle zu integrieren ist. Durch den Wegfall sämtlicher Getriebeeinrichtungen und Abtriebswellen wird zudem das gesamte Systemgewicht auf dem im Flugzeug geforderten sehr niedrigen Niveau gehalten.

In Weiterbildung der Erfindung ist vorgesehen, daß die beiden Stromkreise eine unterschiedliche elektrische Spannung aufweisen, wobei die Spannung des die Kraftstoffpumpe versorgenden Stromkreises erheblich größer als die Spannung des anderen Stromkreises ist. Bei dieser vorteilhaften Ausführung wird somit die Kraftstoffpumpe von einer großen Spannung versorgt, während der zweite Stromkreis das Bordnetz nach wie vor mit einer üblichen niedrigen Spannung, z.B. 28 V, versorgt. Trotz des großen Leistungsbedarfs der Kraftstoffpumpe bleibt die Stromstärke des die Kraftstoffpumpe versorgenden Stromkreises in vorteilhafter Weise durch dieses erfinderische Merkmal sehr niedrig. Auch ein evtl. vorgesehener Leistungssteller kann in gewichtssparender Weis ausgelegt sein. Alle Leitungsquerschnitte dieses Stromkreises können in gewichtssparender und kostengünstiger da materialsparender Weise mit geringen Querschnitten vorgesehen werden. Das Gesamtsystem des Gasturbinentriebwerks weist somit ein besonders niedriges Systemgewicht auf.

Bei der Ausgestaltung der Erfindung hat sich für den Stromkreis der Kraftstoffpumpe eine elektrische Spannung von 260 V als zweckmäßig erwiesen. Diese elektrische Spannung ist ein guter Kompromiß zwischen der Forderung nach niedrigen elektrischen Strömen bei hoher Leistung und der Forderung nach nicht zu hohen Spannungen, da sonst der Isolationsaufwand beträchtlich ansteigt, In speziellen Anwendungsfällen kann die Spannung des Stromkreises der Kraftstoffpumpe jedoch durchaus in vorteilhafter Weise von diesem Wert nach oben oder unten in großem oder kleinem Maße abweichen.

In weiterer Ausgestaltung der Erfindung ist es vorgesehen, daß die vom Gasturbinentriebwerk angetriebene Generatoreinrichtung aus einem einzigen Generator aufgebaut ist, der zwei getrennte Wicklungen für die beiden Stromkreise aufweist. Alternativ hierzu kann die Generatoreinrichtung auch zweckmäßig aus zwei vollständig separaten Einzelgeneratoren bestehen, die parallel vom Gasturbinentriebwerk angetrieben werden. Im ersten Fall entstehen zusätzliche Gewichtsvorteile durch eine geringe Anzahl von Bauteilen, während im zweiten Fall hinsichtlich der Regelbarkeit der beiden Stromkreise Vorteile zu erzielen sind. Durch dieses Konzept ist es ebenfalls möglich, für den jeweiligen Anwendungszweck des Stromkreises einen optimal angepaßten Generator zu verwenden.

In Weiterbildung der Erfindung soll der die Kraftstoffpumpe versorgende Stromkreis in seiner elektrischen Leistung derart geregelt werden, daß die mechanische Ausgangsleistung der Kraftstoffpumpe durch diese Regelung bestimmt ist. Der eine elektrische Stromkreis ist somit leistungsbestimmt geregelt, während der zweite, vom ersten getrennte Stromkreis des Bordnetzes auf eine möglichst konstante Spannung geregelt wird. Die Leistungsregelung des Stromkreises für die Kraftstoffpumpe kann in vorteilhafter Weise ebenfalls eine Spannungsregelung sein, wobei allerdings die Spannung dieses Stromkreises je nach geforderter Leistung hoch oder niedrig gesteuert wird.

Erfindungsgemäß ist es in einer Ausgestaltung der Erfindung vorgesehen, den Stromkreis für die Kraftstoffpumpe mittels eines separat angeordneten elektrischen Leistungsstellers, der diesen Stromkreis beherrscht, in seiner Leistung zu regeln. Dieser Leistungssteller kann in bekannter Weise mit einer elektrischen Regeleinrichtung gekoppelt sein, die in Abhängigkeit von verschiedenen Betriebsparametern des Gasturbinentriebwerks die Leistung der Kraftstoffpumpe steuert. Weiterhin ist es in vorteilhafter Weise möglich, die elektrische Leistung des die Kraftstoffpumpe versorgenden Stromkreises, falls dieser von einem getrennten Generator versorgt wird, durch einen direkten Eingriff in den Generator zu steuern. Dies kann beispielsweise durch Steuerung der Fremderregung des Generators geschehen. Es ist so auf einfache Weise möglich, weitere Bauteile einzusparen und mit einer elektrischen Regeleinrichtung direkt die Leistung der Kraftstoffpumpe zu bestimmten. Für das Gesamtsystem des Gasturbinentriebwerks einschließlich aller Hilfseinrichtungen ist dies besonders gewichtsgünstig.

In Fortbildung der Erfindung liefert die Generatoreinrichtung für den Stromkreis der Kraftstoffpumpe einen mehrphasigen Wechselstrom, insbesondere einen dreiphasigen Drehstrom. Eine Leistungsübertragung von der Generatoreinrichtung zur Kraftstoffpumpe benötigt demnach drei einzelne Kabel, die in vorteilhafter Weise einen besonders geringen Querschnitt aufweisen. Zudem kann die Leistung der Kraftstoffpumpe in vorteilhafter Weise nicht durch eine Spannungsregelung sondern durch eine Frequenzmodulation des Drehstroms gesteuert werden.

Zweckmäßig kann in den Stromkreis für die Kraftstoffpumpe auch ein Gleichrichter eingebaut sein, so daß die Energieversorgung der Kraftstoffpumpe mit Gleichstrom betrieben wird. Dadurch sind nur zwei elektrische Leitungen notwendig, wodurch – relativ geringe Leistungsbandbreiten der Kraftstoffpumpe vorausgesetzt – gegenüber einer dreiadrigen Leitungsausführung für Drehstrom ein Gewichtsvorteil entsteht. Außerdem ist es für manche Anwendungsfälle zweckmäßig, nur eine Zuleitung vorzusehen und die Rückleitung über einen Masseanschluß an den metallischen Bauteilen des Gasturbinentriebwerks bzw. des Flugkörpers und der Hilfseinrichtungen vorzunehmen.

In einer Ausgestaltung der Erfindung ist es vorgesehen, bei einem Gasturbinentriebwerk mit weiteren elektrisch angetriebenen Hilfseinrichtungen, die zum Betrieb eine größere Energie benötigen, diese Hilfseinrichtungen ebenfalls an den zur Übertragung von großen Energien ausgelegten Stromkreis der Generatoreinrichtung anzuschließen. Dies ist dann von Vorteil, wenn von den Hilfseinrichtungen, z.B. der elektrisch angetriebenen Hydraulikpumpe, besonders hohe Leistungsabgaben verlangt werden. Insgesamt wird somit der eine Stromkreis zur Energieübertragung mit einer relativ hohen elektrischen Spannung optimal ausgelegt, während der zweite Stromkreis mit einer relativ geringen Spannung die herkömmliche Stromversorgung des Bordnetzes sicherstellt.

In speziellen Aufgabenfällen des Gasturbinentriebwerks, wenn einige der elektrisch angetriebenen Hilfseinrichtungen Leistungen abgeben müssen, die zumindest teilweise in der Größenordnung der Leistungsabgabe der Kraftstoffpumpe liegen, kann in zweckmäßiger Weise ein separater dritter Stromkreis der Generatoreinrichtung für diese leistungsintensive Hilfseinrichtung vorgesehen werden. Dadurch können auch diese Hilfseinrichtungen mit einem optimal angepaßten und u.U. bereits auch passend geregelten elektrischen Energieanschluß versehen werden. Insgesamt werden so gegenüber den verschiedenen mechanischen Antriebsvarianten und der elektrischen Antriebsvariante mit einem oder zwei elektrischen Stromkreisen erhebliche Gewichtsvorteile erzielt und die Regelbarkeit der Einzelkomponenten sowie des Gesamtsystems verbessert.

Weitere Merkmale und Vorteile der Erfindung ergeben sich aus der nachfolgenden Beschreibung und der Zeichnung, die Ausführungsbeispiele der Erfindung schematisch darstellt. Es zeigt:

Fig. 1 eine schematische Darstellung eines erfindungsgemäßen Gasturbinentriebwerks mit einer Generatoreinrichtung, bestehend aus einem Generator mit zwei getrennten Stromkreisen,

Fig. 2 eine Darstellung nach Fig. 1 mit zwei einzelnen Generatoren und einem elektrischen Leistungssteller,

Fig. 3 eine Darstellung nach Fig. 2 mit einer direkten Regelung des einen Generators,

Fig. 4 eine Darstellung nach Fig. 2 und einer Energieübertragung mit dreiphasigem Drehstrom.

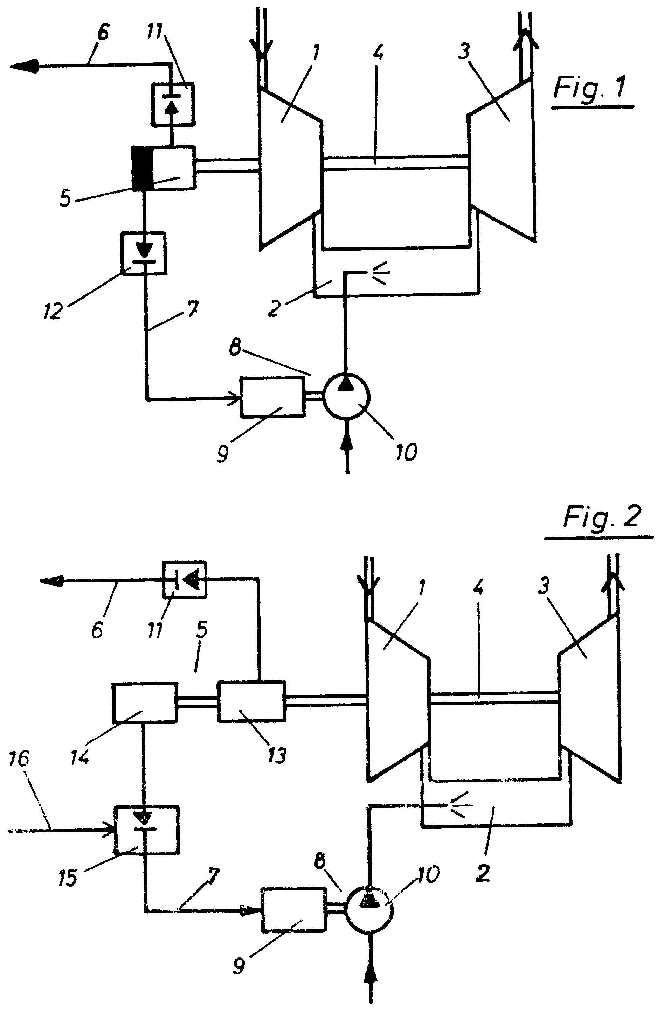

Das in den Fig. 1 bis 4 dargestellte Gasturbinentriebwerk besteht aus einem Verdichter 1, einer Brennkammer 2, einer Turbine 3 und einem Rotor 4. Der Rotor 4 treibt eine Generatoreinrichtung 5 direkt an. Die Generatoreinrichtung 5 ist auf dem verdichterseitigen Wellenende des Rotors 4 angeordnet. Für manche Anwendungsfälle ist es auch zweckmäßig, die Generatoreinrichtung 5 auf dem Rotor 4 zwischen dem Verdichter 1 und der Turbine 3 anzuordnen. Die Generatoreinrichtung 5 weist zwei getrennte Stromkreise 6 und 7 auf, wobei der eine Stromkreis 7 zur Erzeugung und Lieferung der elektrischen Energie für eine Kraftstoffpumpe 8 mit dieser verbunden ist. Die Kraftstoffpumpe 8 besteht aus einem elektrischen Motor 9 und einer mechanischen Pumpe 10. Die mechanische Pumpe 10 fördert den Kraftstoff aus einem nicht dargestellten Tank in die Brennkammer 2, wo dieser verbrennt und letztendlich das gesamte Gasturbinentriebwerk mit Energie versorgt. Der zweite Stromkreis 6 ist für das Bordnetz des Gasturbinentriebwerks oder des Flugzeuges bzw. des Flugkörpers, in der das Gasturbinentriebwerk eingebaut ist, vorgesehen. Es handelt sich bei diesem Stromkreis 6 somit zumeist um einen Gleichstrom-Stromkreis, der durch einen elektrischen Spannungsregler 11 auf eine konstante Spannung, von beispielsweise 28 V, geregelt ist.

Bei dem in Fig. 1 dargestellten Gasturbinentriebwerk besteht die Generatoreinrichtung 5 aus einem einzigen Generator, der über die beiden voneinander getrennten Stromkreise 6 und 7 die Kraftstoffpumpe 8 versorgt. Der einzelne Generator weist in diesem Fall zwei voneinander getrennte Wicklungen auf, wobei eine Wicklung über den Gleichrichter und Spannungsregler 11 mit dem Stromkreis 6 verbunden ist und die zweite Wicklung über einen Gleichrichter 12 an den zweiten Stromkreis 7 und somit an den elektrischen Motor 9 der Kraftstoffpumpe 8 angeschlossen ist. Der Stromkreis 7 ist in seiner Leistung nicht geregelt. Der von der mechanischen Pumpe 10 geförderte Kraftstoff kann in seiner Menge gegebenenfalls durch eine mechanische Steuerung bzw. Absteuerung geregelt werden. Die Spannung in dem die Kraftstoffpumpe 8 versorgenden Stromkreis 7 ist wesentlich höher als die Spannung des für das Bordnetz vorgesehenen Stromkreises 6. Insbesondere kann die Spannung im Stromkreis 7 260 V betragen.

Das in Fig. 2 gezeigte Gasturbinentriebwerk ist bis auf die Generatoreinrichtung 5 identisch mit dem in Fig. 1 gezeigten. Die Generatoreinrichtung 5 besteht aus zwei selbständigen Generatoren 13 und 14. Beide Generatoren 13, 14 werden durch den Rotor 4 parallel angetrieben und können sowohl auf einer axialen Verlängerung des Rotors 4 am verdichterseitigen Ende des Gasturbinentriebwerks als auch auf dem Rotor 4 zwischen dem Verdichter 1 und der Turbine 3 angeordnet sein. Der Generator 13 versorgt in herkömmlicher Weise den Stromkreis 6 für das Bordnetz. Der Generator 14 ist an den Stromkreis 7 zur Energieversogung der Kraftstoffpumpe 8 angeschlossen. Der Generator 14 liefert die elektrische Energie mit hoher Spannung und ungeregelt zunächst an einen elektrischen Leistungssteller 15, der durch eine extern vorgegebene Regelspannung oder einen Regelstrom die elektrische Leistung für den elektrischen Motor 9 der Kraftstoffpumpe 8 vorgibt. Die Regelspannung oder der Regelstrom wird von einer elektrischen Regeleinrichtung, die mehrere Betriebsparameter des Gasturbinentriebwerks und oder des Flugkörpers, in der das Gasturbinentriebwerk eingebaut ist, zu einer Vorgabegröße, nämlich der Regelspannung bzw. dem Regelstrom, für die Menge des zu fördernden Kraftstoffs für das Gasturbinentriebwerk verarbeitet. Der Generator 14 kann in vorteilhafter Weise mit Permanentmagneten ausgerüstet sein. Der elektrische Motor 9 ist vorteilhaft als Gleichstrommotor ausgeführt.

Auch in dem in Fig. 2 gezeigten Ausführungsbeispiel ist der Stromkreis 7 in besonders günstiger Weise an die hohe geforderte Energieübertragungsweise angepaßt. Der Generator 14 ermöglicht durch seine hohe Spannung, von beispielsweise 260 V, die Leitungsquerschnitte zum elektrischen Motor 9 klein zu halten, so daß das gesamte System bestehend aus Gasturbinentriebwerk, Generatoreinrichtung 5 und Kraftstoffpumpe 8 sowie allen notwendigen Energieübertragungseinheiten gewichtssparend ist. Zudem ist der von der mechanischen Pumpe 10 in die Brennkammer 2 eingebrachte Kraftstoff bereits ohne weitere Zusatzeinrichtung in seiner Menge geregelt.

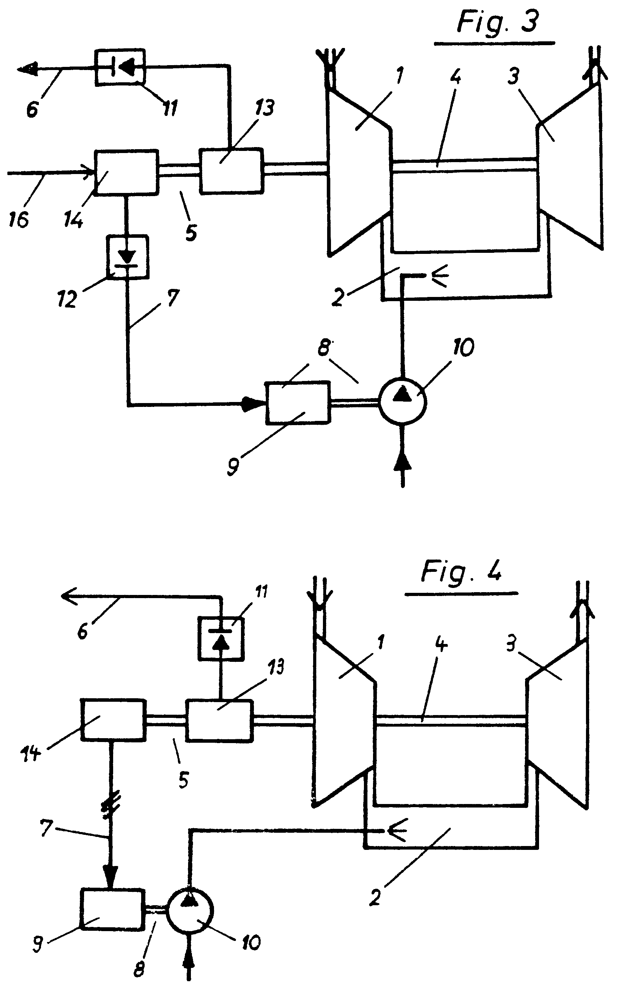

Das in Fig. 3 gezeigte Ausführungsbeispiel ist ebenfalls mit zwei einzelnen Generatoren 13, 14 versehen und insgesamt dem in Fig. 2 gezeigten Ausführungsbeispiel sehr ähnlich. Es wird jedoch eine externe Regelspannung direkt auf den Generator 14 aufgegeben, dessen Ausgangsspannung entsprechend dieser Regelspannung 16 variiert. Der Stromkreis 7 für die Kraftstoffpumpe ist im weiteren noch mit einem Gleichrichter 12 versehen, der die geregelte Wechselstromspannung des Generators 14 gleichrichtet. Die Steuerung der Regelspannung 16 ist der in Fig. 2 gezeigten identisch.

Fig. 4 zeigt ein weiteres Ausführungsbeispiel der Erfindung, wobei die Generatoreinrichtung 5 wiederum aus zwei einzelnen Generatoren 13, 14 besteht und der eine Generator 14 an den Stromkreis 7 zur Versorgung der Kraftstoffpumpe 8 angeschlossen ist. Der Generator 14 weist einen mehrphasigen Wechselstromausgang, z.B. für Drehstrom, zur Versorgung des elektrischen Motors 9 der Kraftstoffpumpe 8 auf. Der Stromkreis 7 ist in diesem Ausführungsbeispiel nicht leistungsgeregelt, weshalb eine getrennte, beispielsweise mechanische, Steuerung der von der mechanischen Pumpe 10 geförderten Kraftstoffmenge notwendig ist. Die Ernegieübertragung von dem Generator 14 zum elektrischen Motor 9 kann durch den mehrphasigen Wechselstrom mit besonders querschnittsschwachen und damit gewichtssparenden Leitungsverbindungen bewerkstelligt werden. Der Generator 14 ist dabei in vorteilhafter Weise ein Permanentmagnet-Generator und der elektrische Motor 9 der Kraftstoffpumpe 8 ein Asynchronmotor. Es ist jedoch auch zweckmäßig, den Generator 14 so auszubilden, daß zur Leistungsregelung der Kraftstoffpumpe 8 die Frequenz des Drehstroms im Stromkreis 7 moduliert wird. Der Motor 9 der Kraftstoffpumpe 8 kann dann auch als Synchronmotor ausgebildet sein. Es entfällt eine zusätzliche Leistungsregelung der Kraftstoffpumpe 8.

In vorteilhafter Ausgestaltung der Erfindung kann an den Rotor 4 auch noch ein weiterer nicht gezeigter Generator angeschlossen sein, der noch zusätzliche elektrische Verbraucher bzw. elektrische Hilfseinrichtungen des Gasturbinentriebwerks bzw. des Flugkörpers, die eine überdurchschnittlich hohe elektrische Leistungsaufnahme aufweisen, mit elektrischer Energie versorgt. Auf diese Weise wird das Bordnetz nur zur Versorgung elektrischer Kleinverbraucher mit Steuerfunktion herangezogen, während die elektrischen Verbraucher, die größere elektrische Leistungen benötigen, durch getrennte Stromkreise mit speziell angepaßten Spannungen und evtl. geregelter Energieübertragung versorgt werden. Die verschiedenen, voneinander getrennten Stromkreise können je nach speziellem Anwendungsfall in vorteilhafter Weise auch von einer einzigen Generatoreinrichtung mit verschiedenen getrennten Wicklungen gespeist werden. Insgesamt wird durch das System der voneinander getrennten Stromkreise, die unterschiedliche Stromspannungen aufweisen, eine Gewichtsverminderung des Gesamtgasturbinensystems durch geringere Leitungsquerschnitte der elektrischen Verbindungsleitungen erzielt. Es ist vorteilhafterweise auch zweckmäßig bei Stromkreisen, alle leistungsintensiven Verbraucher an einen Stromkreis und die Kleinverbraucher an den anderen Stromkreis anzuschließen.

**Patentansprüche**

1. Flugkörpergasturbinentriebwerk das zumindest aus einem Verdichter (1), einer Brennkammer (2) und einer Turbine (3) sowie einem zugeordneten Rotor (4) aufgebaut ist, bei dem die Brennkammer (2) von einer separaten Kraftstoffpumpe (8) mit Kraftstoff versorgt ist und der Rotor (4) mechanisch direkt mit einer elektrischen Generatoreinrichtung (5) zum Antrieb von Hilfseinrichtungen verbunden ist, dadurch gekennzeichnet, daß die Kraftstoffpumpe (8) elektrisch angetrieben wird, wobei die Generatoreinrichtung zur Erzeugung und Lieferung von elektrischer Energie zumindest zwei voneinander vollständig getrennte Stromkreise (6, 7) aufweist und daß einer der Stromkreise (6, 7) zur Versorgung der Kraftstoffpumpe (8) mit elektrischer Energie vorgesehen ist.

2. Gasturbinentriebwerk nach Anspruch 1, dadurch gekennzeichnet, daß der Rotor (4) zur Abgabe von mechanischer Energie ausschließlich mit der Generatoreinrichtung (5) verbunden ist.

3. Gasturbinentriebwerk nach Anspruch 1 oder 2, dadurch gekennzeichnet, daß die beiden Stromkreise (6, 7) eine unterschiedliche elektrische Spannung aufweisen, wobei die Spannung des die Kraftstoffpumpe (8) versorgenden Stromkreises (7) erheblich höher als die Spannung des anderen Stromkreises (6) ist, vorzugsweise in etwa 260 V beträgt.

4. Gasturbinentriebwerk nach einem der Ansprüche 1 bis 3, dadurch gekennzeichnet, daß die Generatoreinrichtung (5) aus einem einzelnen Generator besteht, der zwei getrennte Wicklungen für jeweils einen Stromkreis (6, 7) aufweist.

5. Gasturbinentriebwerk nach einem der Ansprüche 1 bis 4, dadurch gekennzeichnet, daß die Generatoreinrichtung (5) aus zwei getrennten Generatoren (13, 14) besteht, wobei jeweils ein Generator (13, 14) für einen Stromkreis (6, 7) vorgesehen ist.

6. Gasturbinentriebwerk nach einem der Ansprüche 1 bis 5, dadurch gekennzeichnet, daß eine elektrische Regeleinrichtung, beispielsweise eine Regelelektronik, vorgesehen ist, die in Abhängigkeit verschiedener Betriebsparameter des Gasturbinentriebwerks die Leistung der Kraftstoffpumpe steuert wobei die elektrische Regeleinrichtung die Leistungsabgabe des für die Kraftstoffpumpe (8) vorgesehenen Stromkreises (7) durch einen separaten, elektrischen Leistungssteller (15) beherrscht.

7. Gasturbinentriebwerk nach einem der Ansprüche 1 bis 5, dadurch gekennzeichnet, daß eine elektrische Regeleinrichtung, beispielsweise eine Regelelektronik, vorgesehen ist, die in Abhängigkeit von verschiedenen Betriebsparametern des Gasturbinentriebwerks die Leistung der Kraftstoffpumpe (8) steuert, wobei die Generatoreinrichtung 5, insbesondere der Generator (14), für den Stromkreis (7) der Kraftstoffpumpe (8) durch die elektrische Regeleinrichtung in seiner Leistungsabgabe direkt regelbar ist.

8. Gasturbinentriebwerk nach einem der Ansprüche 1 bis 7, dadurch gekennzeichnet, daß der für die Kraftstoffpumpe (8) vorgesehen Stromkreis (7) von der Generatoreinrichtung (5) mit einem mehrphasigen Wechselstrom versorgbar ist.

9. Gasturbinentriebwerk nach einem der Ansprüche 1 bis 7, dadurch gekennzeichnet, daß der für die Kraftstoffpumpe (8) vorgesehene Stromkreis (7) mit einem Gleichrichter (12) versehen ist und die elektrische Kraftstoffpumpe (8) mit Gleichstrom versorgbar ist.

10. Gasturbinentriebwerk nach einem der Ansprüche 1 bis 9 mit weiteren zum Betrieb des Gasturbinentriebwerks notwendigen, elektrisch angetriebenen Hilfseinrichtungen, wie beispielsweise eine Schmierölpumpe oder eine Hydraulikpumpe, und mit Steuereinrichtungen zum Betrieb des Gasturbinentriebwerks oder des zugehörigen Flugkörpers, beispielsweise eine Avionik, dadurch gekennzeichnet, daß die elektrisch angetriebenen Hilfseinrichtungen an den Stromkreis (7) für die Kraftstoffpumpe (8) und die Steuereinrichtungen an den weiteren Stromkreis, der eine erheblich geringere Spannung aufweist, angeschlossen sind.

## Claims

1. A flying object gas turbine propulsion unit which is assembled from at least one compressor (1), a combustion chamber (2), a turbine (3) and an associated rotor (4), wherein the combustion chamber (2) is supplied with fuel by a separate fuel pump (8) and the rotor (4) is connected mechanically directly with an electric generator device (5) for the drive of auxiliaries, characterised in that the fuel pump (8) is driven electrically, while the generator device for the production and delivery of electrical energy comprises at least two mutually completely separate current circuits (6, 7), and in that one of the current circuits (6, 7) is provided for the supply of the fuel pump (8) with electrical energy.

2. A gas turbine propulsion unit according to claim 1, characterised in that the rotor (4) for the emission of mechanical energy is connected exclusively with the generator device (5).

3. A gas turbine propulsion unit according to any one of claims 1 or 2, characterised in that the two current circuits (6, 7) have different electrical voltages, the voltage of the current circuit (7) which supplies the fuel pump (8) being considerably higher than the voltage of the other current circuit (6) and amounting preferably to approximately 260 V.

4. A gas turbine propulsion unit according to any one of claims 1 to 3, characterised in that the generator device (5) comprises one single generator which has two separate windings for one current circuit (6, 7) each.

5. A gas turbine propulsion unit according to any one of claims 1 to 4, characterised in that the generator device (5) comprises two separate generators (13, 14), one generator (13, 14) being provided for each current circuit (6, 7).

6. A gas turbine propulsion unit according to any one of claims 1 to 5, characterised in that an electric regulator device, for example an electronic regulating system, is provided which controls the output of the fuel pump in dependance upon various operational parameters of the gas turbine propulsion unit, the electric regulator device governing the power output of the current circuit (7) provided for the fuel pump (8) through a separate electric power adjuster (15).

7. A gas turbine propulsion unit according to any one of claims 1 to 5, characterised in that an electric regulator device, for example an electronic regulating system, is provided which controls the output of the fuel pump (8) in dependence upon various operational parameters of the gas turbine propulsion unit, the generator device (5), especially the generator (14), for the electric regulator device being directly regulable in its power output by the electric regulator device.

8. A gas turbine propulsion unit according to any one of claims 1 to 7, characterised in that the current circuit (7) provided for the fuel pump (8) can be supplied by the generator device (5) with a polyphase alternating current.

9. A gas turbine propulsion unit according to any one of claims 1 to 7, characterised in that the current circuit (7) provided for the fuel pump (8) is provided with a rectifier (12) and the electric fuel pump (8) can be supplied with direct current.

10. A gas turbine propulsion unit according to any one of claims 1 to 9 having further electrically-driven auxiliaries necessary for the operation of the gas turbine propulsion unit, such for example as a lubricating oil pump or a hydraulic pump, and having control devices for the operation of the gas turbine propulsion unit or of the pertinent flying object, for example avionics equipment, characterised in that the electrically-driven accessories are connected to the current circuit (7) for the fuel pump (8) and the control devices are connected to the further current circuit which has a considerably lower voltage.

## Revendications

1. Groupe propulseur à turbine à gaz pour missile, construit à partir d'un compresseur (1), d'une chambre de combustion (2) et d'une turbine (3), ainsi que d'un rotor (4) contigu, pour lequel la chambre de combustion (2) est alimentée en carburant par une pompe de carburant (8) séparée et le rotor (4) étant directement relié mécaniquement à un dispositif générateur (5) pour l'entraînement de dispositifs auxiliaires, caractérisé en ce que la pompe de carburant (8) est entraînée électriquement, le dispositif générateur destiné à produire et à délivrer de l'énergie électrique présentant au moins deux circuits électriques (6, 7) complètement séparés l'un de l'autre, et en ce que l'un des circuits électriques (6, 7) est prévu pour l'alimentation de la pompe de carburant (8) en énergie électrique.

2. Groupe propulseur à turbine à gaz selon la revendication 1, caractérisé en ce que le rotor (4) destiné à délivrer de l'énergie mécanique est exclusivement relié au dispositif générateur (5).

3. Groupe propulseur à turbine à gaz selon l'une des revendications 1 ou 2, caractérisé en ce que les deux circuits électriques (6, 7) présentent une tension électrique différente, la tension du circuit électrique (7) alimentant la pompe de carburant (8) étant notablement plus élevée que la tension de l'autre circuit électrique (6), de préférence située environ à 260 V.

4. Groupe propulseur à turbine à gaz selon l'une des revendications 1 à 3, caractérisé en ce que le dispositif générateur (5) se compose d'un générateur individuel, présentant deux bobinages séparés pour alimenter chacun des circuits électriques (6, 7).

5. Groupe propulseur à turbine à gaz selon l'une des revendications 1 à 4, caractérisé en ce que le dispositif générateur (5) se compose de deux générateurs séparés (13, 14), un générateur (13, 14) étant chaque fois prévu pour un circuit électrique (6, 7).

6. Groupe propulseur à turbine à gaz selon l'une des revendications 1 à 5, caractérisé en ce qu'il est prévu un dispositif de réglage électrique, par exemple un système électronique de réglage, qui commande en fonction de différents paramètres de fonctionnement du groupe de propulsion à turbine à gaz la puissance de la pompe de carburant, le dispositif de réglage électrique commandant la fourniture de puissance du circuit électrique (7) prévu pour la pompe de carburant (8) au moyen d'un régulateur de puissance (15) séparé, électrique.

7. Groupe propulseur à turbine à gaz selon l'une des revendications 1 à 5, caractérisé en ce qu'il est prévu un dispositif de réglage électrique, par exemple un système électronique de réglage, qui commande en fonction de différents paramètres de fonctionnement du groupe de propulsion à turbine à gaz la puissance de la pompe de carburant (8), la puissance délivrée par le dispositif générateur (5), en particulier le générateur (14), pour le circuit électrique (7) de la pompe de carburant (8), étant directement réglable au moyen du dispositif de réglage électrique.

8. Groupe propulseur à turbine à gaz selon l'une des revendications 1 à 7, caractérisé en ce que le circuit électrique (7) prévu pour la pompe de carburant (8) est susceptible d'être alimenté par le dispositif générateur (5) avec un courant alternatif polyphasé.

9. Groupe propulseur à turbine à gaz selon l'une des revendications 1 à 7, caractérisé en ce que le circuit électrique (7) prévu pour la pompe de carburant (8) est pourvu d'un redresseur (12) et la pompe de carburant est susceptible d'être alimenté avec un courant continu.

10. Groupe propulseur à turbine à gaz selon l'une des revendications 1 à 9, avec d'autres dispositifs auxiliaires nécessaires au fonctionnement du groupe de propulsion à turbine à gaz, entraînés électriquement, tels que par exemple une pompe à huile de lubrification ou une pompe hydraulique, et avec des dispositifs de commande pour le fonctionnement du groupe de propulsion à turbine à gaz, ou du missile correspondant, par exemple une avionique, caractérisé en ce que les dispositifs auxiliaires entraînées électriquement sont raccordés au circuit électrique (7) destiné à la pompe de carburant (8) et que les dispositifs de commande sont raccordés à l'autre circuit électrique présentant une tension notablement plus faible.

_Fig. 1_

_Fig. 2_

_Fig. 3_

_Fig. 4_